# EUROPÄISCHE PATENTSCHRIFT

(11) **EP 1 009 985 B1**
(45) Veröffentlichungstag und Bekanntmachung des Hinweises auf die Patenterteilung: **13.02.2002**
(21) Anmeldenummer: 98951205.8
(22) Anmeldetag: 24.08.1998
(51) Int. Cl.: G01L 7/08

(54) **TRENNMEMBRANANORDNUNG FÜR EINEN DRUCKMESSUMFORMER MIT WELLENBERGRAND UND VORGEPRÄGTER SOWIE NACHGEPRÄGTER MEMBRAN**
SEPARATING MEMBRANE SYSTEM FOR A PRESSURE TRANSDUCER, WITH A WAVE CREST EDGE AND A PRE- AND POST-CUT MEMBRANE
SYSTEME DE MEMBRANE DE SEPARATION POUR TRANSDUCTEUR DE MESURE DE PRESSION A BORD DE TYPE SOMMET DE MONTAGNE ET MEMBRANE PREMATRICEE ET POSTMATRICEE

(30) Priorität: 29.08.1997 DE 19738704
(43) Veröffentlichungstag der Anmeldung: 21.06.2000
(73) Patentinhaber: SIEMENS AKTIENGESELLSCHAFT, 80333 München (DE)
(72) Erfinder: STÜNDL, Matthias, D-76185 Karlsruhe (DE)
(86) Internationale Anmeldenummer: DE9802481
(87) Internationale Veröffentlichungsnummer: WO9912013

(56) Entgegenhaltungen:
- DE-U- 29 704 321
- US-A- 3 566 750
- US-A- 4 072 058
- US-A- 4 199 991
- US-A- 5 029 478

## Beschreibung

Die Erfindung bezieht sich auf Verfahren zum Herstellen einer Trennmembrananordnung und auf eine entsprechende Trennmembrananordnung für einen Druckmeßumformer mit einem an seiner äußeren Oberfläche einen strukturierten Bereich mit ringförmigen, wellenbergartigen Erhebungen und ringförmigen, wellentalartigen Vertiefungen aufweisenden Innenkörper, mit einer Trennmembran, die im Bereich ihres äußeren Umfanges einen durch Vorprägen gebildeten Kragen aufweist, mittels einer ringförmigen Verbindungsstelle am Kragen fest und gasdicht mit dem Innenkörper verbunden ist und durch Nachprägen der äußeren Oberfläche des Innenkörpers entsprechend gewellt ist, und mit einer äußeren Druckkappe, die unter Zwischenlegen eines Dichtungsringes gegen die Trennmembran gepreßt ist.

Ein Druck- bzw. Druckdifferenz-Meßumformer STD 915 der Firma Honeywell ist offensichtlich folgendermaßen hersgestellt. Die Trennmembran wird so vorgeprägt, daß sie eine topfartige Gestalt mit einem breiten Rand aufweist. Am inneren Bereich des Randes ist die Trennmembran mit einem Innenkörper des Meßumformers ringförmig verschweißt; außerhalb des ringförmigen Schweißnaht ist bei dem bekannten Meßumformer ein Dichtungsring vorgesehen, der in einer Ringnut einer Druckkappe liegt und mit der Druckkappe gegen die Trennmembran am Innenkörper gepreßt wird. Vorher ist bei der Herstellung des bekannten Meßumformers die Trennmembran nachgeprägt worden, indem sie gegen einen strukturierten Bereich der Oberfläche mit wellenartigen Erhebungen und Vertiefungen gedrückt worden ist.

Der Erfindung liegt die Aufgabe zugrunde, ein Verfahren zum Herstellen einer Trennmembrananordnung für einen Druckmeßumformer vorzuschlagen, mit welchem sich ein Druckmeßumformer mit sehr guten Meßeigenschaften herstellen laßt.

Zur Lösung dieser Aufgabe wird bei einem Verfahren der eingangs angegebenen Art erfindungsgemäß ein Innenkörper verwendet, dessen strukturierter Bereich nach außen durch eine äußere wellenbergartige Erhebung begrenzt ist; die vorgeprägte Trennmembran wird mit ihrem Kragen außen an der äußeren wellenbergartigen Erhebung anliegend mit dem Innenkörper verbunden, danach wird das Nachprägen der Trennmembran durchgeführt und dann die Druckkappe mit dem Dichtungsring angebracht.

Ein wesentlicher Vorteil des erfindungsgemäßen Verfahrens besteht darin, daß mit ihm ein Druckmeßumformer - bzw. selbstverständlich auch ein Druckdifferenz-Meßumformer - herstellbar ist, bei dem sich die Trennmembran wegen der Anbringung des Kragens der vorgeprägten Trennmembran außen an der äußeren wellenartigen Erhebung und wegen des anschließenden Nachprägens durch die entstehende und bleibende radiale Zugvorspannung in der Trennmembran an die äußere Flanke der äußeren wellenartigen Erhebung und deren "Kamm" anpreßt. Dadurch ist der Einspanndurchmesser der Trennmembran genau festgelegt und ändert sich auch bei Druckschwankungen kaum. Die Volumensteifigkeit der Trennmembran bleibt also auch bei Änderungen des Drucks nahezu konstant.

Bei einer vorteilhaften Ausführungsform des erfindungsgemäßen Verfahrens wird der Kragen an der äußeren Flanke der äußeren wellenartigen Erhebung mit dem Innenkörper verbunden. Damit läßt sich ein relativ kompakt aufgebauter Druckmeßumformer gewinnen.

Ferner wird es zur Erzielung eines Druckmeßumformers mit genau definiertem Einspanndurchmesser seiner Trennmembran als vorteilhaft angesehen, wenn der Kragen an einem unter dem Niveau der wellenartigen Vertiefungen liegenden Bereich der verlängerten Flanke der äußeren wellenartigen Erhebung mit dem Innenkörper verbunden wird.

Bei einer weiteren vorteilhaften Ausführungsform des erfindungsgemäßen Verfahrens wird die Trennmembran so vorgeprägt, daß sie an ihrem äußeren Rand einen sich an den Kragen anschließenden ebenen Ringbereich aufweist; die Trennmembran wird an ihrem ebenen Ringbereich mit einem ebenen Rand des Innenkörpers verbunden.

Wenn ein Druckmeßumformer für aggressive Medien hergestellt werden soll, wird in vorteilhafter Weise der Dichtungsring die Verbindungsstelle zwischen Trennmembran und Innenkörper überdeckend angeordnet.

Der Erfindung liegt ferner die Aufgabe zugrunde, eine Trennmembrananordnung für einen Druckmeßumformer vorzuschlagen, welche dem Druckmeßumformer sehr gute Meßeigenschaften verleiht.

Zur Lösung dieser Aufgabe ist bei einer Trennmembrananordnung für einen Druckmeßumformer mit einem an seiner äußeren Oberfläche einen strukturierten Bereich mit ringförmigen, wellenbergartigen Erhebungen und ringförmigen, wellentalartigen Vertiefungen aufweisenden Innenkörper, mit einer Trennmembran, die im Bereich ihres äußeren Umfanges einen durch Vorprägen gebildeten Kragen aufweist, mittels einer ringförmigen Verbindungsstelle am Kragen fest und gasdicht mit dem Innenkörper verbunden ist und durch Nachprägen der äußeren Oberfläche des Innenkörpers entsprechend gewellt ist, und mit einer äußeren Druckkappe, die unter Zwischenlegen eines Dichtungsringes gegen die Trennmembran gepreßt ist, erfindungsgemäß der strukturierte Bereich des Innenkörpers nach außen durch eine äußere wellenbergartige Erhebung begrenzt und die Trennmembran mit ihrem Kragen außen an der äußeren wellenbergartigen Erhebung anliegend mit dem Innenkörper verbunden.

Es ist zwar aus der US-Patentschrift 4,199,991 eine Trennmembrananordnung entnehmbar, bei der ein Innenkörper eines Druckmeßumformers auf seiner äußeren Oberfläche in Randnähe einen strukturierten Bereich mit einer ringförmigen, wellenbergartigen Erhebung und einer ringförmigen, wellenartigen Vertiefung aufweist und am Rande der äußeren Oberfläche des Innenkörpers mittels einer ringförmigen Schweißnaht eine Trennmembran befestigt ist, die der äußeren Oberfläche des Innenkörpers entsprechend gewellt ist, und bei der gegen die Trennmembran eine Druckkappe gepreßt ist, die am Rande eines inneren, eingezogenen Bereichs einen Dichtungsring aufnimmt, jedoch weist die bekannte Trennmembrananordnung keinen vorgeprägten Kragen auf; auch ist der strukturierte Bereich des Innenkörpers durch eine wellentalartige Vertiefung nach außen begrenzt. Mit der bekannten Trennmembrananordnung ist verhindert, daß womöglich aggressive Medien in der Druckkappe den Innenkörper angreifen können; der Innenkörper ist nämlich mittels der Trennmembran und des Dichtungsringes vollständig gegenüber dem Medium in der Druckkammer abgeschlossen. Als Material für den Innenkörper muß daher gegenüber aggressiven Medien beständiges Material nicht verwendet werden, was sich kostengünstig bei der Herstellung auswirkt und darüber hinaus bezüglich des Verschweißens der Trennmembran mit dem Innenkörper keine besonderen Probleme aufwirft.

Ein wesentlicher Vorteil der erfindungsgemäßen Trennmembrananordnung besteht darin, daß durch ihre Ausgestaltung der Einspanndurchmesser der Trennmembran relativ genau festgelegt ist und sich auch bei Druckschwankungen innerhalb eines Druckmeßumformers nicht verändert. Weitet sich nämlich die Druckkappe infolge Änderung des Druckes auf, dann bleibt der Einspanndurchmesser der Trennmembran bei der erfindungsgemäßen Trennmembraneinrichtung weitestgehend unbeeinflußt, weil er durch den "Kamm" der äußeren wellenbergartigen Erhebung festgelegt ist. Wichtig ist dies, weil der Einspanndurchmesser einer Trennmembran einen sehr großen Einfluß auf die Federeigenschaften der Trennmembran und damit auf die Meßeigenschaften eines Druckmeßumformers hat. Die Meßeigenschaften werden also durch die Trennmembrananordnung gemäß der Erfindung nicht nachteilig verändert.

Bei der erfindungsgemäßen Trennmembrananordnung kommt es darauf an, daß die Verbindungsstelle zwischen Trennmembran und Innenkörper außerhalb und unterhalb der äußeren wellenbergartigen Erhöhung und unterhalb des "Kammes" dieser Erhebung liegt. Dies kann dadurch erreicht werden, daß die äußere Flanke der äußeren wellenbergartigen Erhebung bis unter das Niveau der wellentalartigen Vertiefungen verlängert ist und die Verbindungsstelle zwischen Trennmembran und Innenkörper im verlängerten Bereich der äußeren Flanke liegt. In diesem Fall wird nämlich auch bei starken Aufweitungen der Druckkappe durch hohe Druckänderungen ein merkliches Verändern des Einspanndurchmessers der Trennmembran verhindert.

Bei einer weiteren vorteilhaften Ausführungsform der erfindungsgemäßen Trennmembrananordnung weist die Trennmembran an ihrem äußeren Rand einen sich an den Kragen anschließenden ebenen Ringbereich auf, der an ihrem ebenen Ringbereich mit einem ebenen Rand des Innenkörpers verbunden ist.

Um gegebenenfalls aggressiven Medien in der Druckkammer den Zutritt zur Verbindungsstelle zu verwehren, ist in vorteilhafter Weise bei der erfindungsgemäßen Trennmembrananordnung der Dichtungsring die Verbindungsstelle überdeckend angeordnet.

Zur Erläuterung der Erfindung ist in
Figur 1 teilweise im Schnitt und teilweise in einer Seitenansicht ein als Druckdifferenzmeßumformer ausgebildeter Meßumformer mit einem Ausführungsbeispiel der erfindungsgemäßen Trennmembrananordnung,
in Figur 2 eine Einzelheit des Ausführungsbeispiels nach Figur 1 und in
Figur 3 eine andere Ausgestaltung der erfindungsgemäßen Trennmembrananordnung gezeigt.

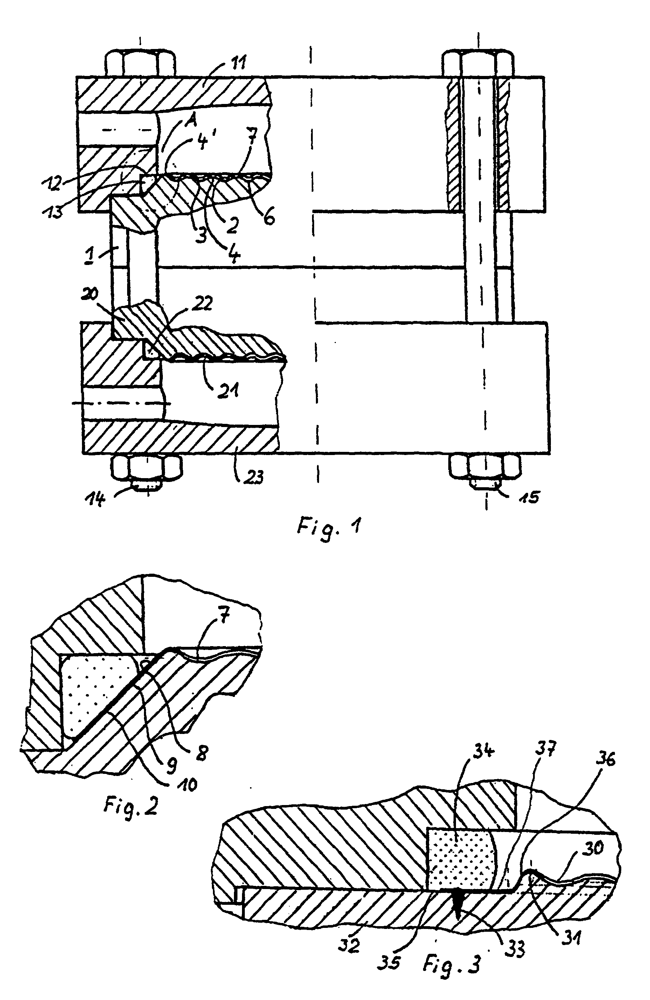

Wie die Figur 1 erkennen läßt, ist ein Innenkörper 1 des gezeigten Meßumformers an seiner äußeren Oberfläche 2 mit einem strukturierten Bereich 3 versehen. Dieser strukturierte Bereich 3 weist ringförmige, wellenbergartige Erhebungen 4 auf und ist nach außen durch eine äußere wellenbergartige Erhebung 4' begrenzt. Außerdem sind mehrere wellentalartige, ringförmige Vertiefungen 6 des strukturierten Bereichs 3 in der Figur 1 zu erkennen.

An seiner äußeren Oberfläche 2 ist der Innenkörper 1 mit einer Trennmembran 7 (vgl. auch Figur 2, die die Einzelheit A der Figur 1 zeigt) versehen. Die Trennmembran 7 ist vor ihrer Verbindung mit dem Innenkörper 1 vorgeprägt, und zwar so, daß sie einen in den Figuren jeweils nach unten weisenden Kragen 8 erhält. Dabei ist die Trennmembran 7 so geprägt, daß sie mit dem Kragen 8 gegen die äußere Flanke 9 der äußeren ringförmigen, wellenbergartigen Erhebung 4' gelegt werden kann. Die Flanke 9 erstreckt sich weit unter das Niveau der wellentalartigen Vertiefungen 6 und ist mittels einer Verbindungsstelle 10, bei der es sich bei dem Ausführungsbeispiel nach den Figuren 1 und 2 um eine Klebestelle handelt, mit dem Innenkörper 1 fest verbunden.

Auf die soweit hergestellte Membrananordnung wird anschlieβend ein Druck derart ausgeübt, daß sich die Trennmembran 7 gegen den strukturierten Bereich 3 des Innenkörpers 1 preßt und dabei nachgeprägt wird. Dabei entstehen bleibende radiale Zugvorspannungen in der Trennmembran 7, durch die sichergestellt ist, daß beim Einsatz des Druckmeßumformers die Trennmembran auch bei Druckschwankungen stets definiert an der äußeren wellenbergartigen Erhebung bzw. deren Kamm anliegt, wodurch ein vorgegebener Einspanndurchmesser stets erhalten bleibt.

Auf die soweit fertig gestellte Trennmembrananordnung wird eine Druckkappe 11 aufgesetzt, die in einer ringförmigen Ausnehmung 12 einen Dichtungsring 13 aufnimmt. Die Druckkappe 11 wird in üblicher Weise mittels Spannbolzen 14 und 15 fest dem Innenkörper 1 verspannt, wodurch der Dichtungsring 13 fest gegen die Trennmembran 7 im Bereich der ringförmigen Verbindungsstelle 10 gedrückt ist.

Bei dem Ausführungsbeispiel nach Figur 1 handelt es sich um einen Druckdifferenzmeßumformer, dessen Gesamtaufbau sich durch Spiegelung der oben beschriebenen Konfiguration an einer gedachten, horizontalen Mittellinie ergibt. Es ist also ein weiterer Innenkörper 20 mit einer weiteren Trennmembran 21, einem weiteren Dichtungsring 22 und einer weiteren Druckkappe 23 vorhanden.

Die Figur 3 zeigt eine Einzelheit entsprechend der Einzelheit A gemäß den Figuren 1 und 2. Im Unterschied zu dem Ausführungsbeispiel nach den ersten beiden Figuren ist hier eine Trennmembran 30 außerhalb einer äußeren, ringförmigen, wellenartigen Erhebung 31 an einem ebenen Rand 35 eines Innenkörpers 32 durch eine ringförmige Schweißstelle 33 befestigt, indem ein durch Vorprägen außerhalb eines Kragens 36 an der Trennmembran 30 gebildeter ebener Ringbereich 37 mit dem Rand 35 verschweißt ist. Ein Dichtungsring 34 ist wiederum so angebracht, daß er die Schweißstelle 33 abdeckt.

Beim Einsatz eines Druckdifferenz-Meßumformers mit der dargestellten Trennmembrananordnung befindet sich in den Innenräumen der Druckkappen 11 und 23 ein Medium, das gegebenenfalls aggressive Eigenschaften haben kann. Dieses Medium kommt mit dem Innenkörper 1 bzw. 20 nicht in Berührung, weil dieser mittels der Trennmembran 7 bzw. 21 und des Dichtungsringes 13 bzw. 22 dicht abgeschlossen ist. Steigt der statische Druck des Mediums in den Druckkappen 11 bzw. 23, dann führt dies zu einer Aufweitung der Druckkappen; diese wirkt sich jedoch auf die Volumensteifigkeit einer Trennmembran eines Druckdifferenz-Meßumformers mit der dargestellten Trennmembrananordnung praktisch nicht aus, weil der Einspanndurchmesser der Trennmembran 7 durch ihre Anlage an der äußeren ringförmigen, wellenartigen Erhebung 4' infolge der radialen Zugvorspannung der Trennmembran 7 definiert ist.

## Patentansprüche

1. Verfahren zum Herstellen einer Trennmembrananordnung für einen Druckmeßumformer mit
- einem an seiner äußeren Oberfläche (2) einen strukturierten Bereich (3) mit ringförmigen, wellenbergartigen Erhebungen (4, 4') und ringförmigen, wellentalartigen Vertiefungen (6) aufweisenden Innenkörper (1),
- mit einer Trennmembran (7),
- die im Bereich ihres äußeren Umfanges einen durch Vorprägen gebildeten Kragen aufweist, mittels einer ringförmigen Verbindungsstelle (10) am Kragen (8) fest und gasdicht mit dem Innenkörper (1) verbunden ist und durch Nachprägen an der äußeren Oberfläche des Innenkörpers (1) entsprechend gewellt ist, und
- mit einer äußeren Druckkappe (11),
- die unter Zwischenlegen eines Dichtungsringes (13) gegen die Trennmembran (7) gepreßt ist,
**dadurch gekennzeichnet, daß**
- ein Innenkörper (1) verwendet wird, dessen strukturierter Bereich (3) nach außen durch eine äußere wellenbergartige Erhebung (4') begrenzt ist,
- die vorgeprägte Trennmembran (7) mit ihrem Kragen (8) außen an der äußeren wellenbergartigen Erhebung (4') anliegend mit dem Innenkörper (1) verbunden wird,
- danach das Nachprägen der Trennmembran (7) durchgeführt wird und
- dann die Druckkappe (11) mit dem Dichtungsring (13) angebracht wird.

2. Verfahren nach Anspruch 1,
**dadurch gekennzeichnet, daß**
- der Kragen (8) an der äußeren Flanke der äußeren wellenartigen Erhebung (4') mit dem Innenkörper (1) verbunden wird.

3. Verfahren nach Anspruch 1,
**dadurch gekennzeichnet, daß**
- der Kragen (8) an einem unter dem Niveau der wellenartigen Vertiefungen (6) liegenden Bereich der verlängerten Flanke der äußeren wellenartigen Erhebung (4') mit dem Innenkörper (1) verbunden wird.

4. Verfahren nach Anspruch 1,
**dadurch gekennzeichnet, daß**
- die Trennmembran so vorgeprägt wird, daß sie an ihrem äußeren Rand einen sich an den Kragen anschließenden ebenen Ringbereich aufweist, und
- die Trennmembran an ihrem ebenen Ringbereich mit einem ebenen Rand des Innenkörpers verbunden wird.

5. Verfahren nach einem der vorangehenden Ansprüche,
**dadurch gekennzeichnet, daß**
- der Dichtungsring die Verbindungsstelle zwischen Trennmembran und Innenkörper überdeckend angeordnet wird.

6. Trennmembrananordnung für einen Druckmeßumformer mit
- einem an seiner äußeren Oberfläche (2) einen strukturierten Bereich (3) mit ringförmigen, wellenbergartigen Erhebungen (4, 4') und ringförmigen, wellentalartigen Vertiefungen (6) aufweisenden Innenkörper (1),
- mit einer Trennmembran (7),
- die im Bereich ihres äußeren Umfanges einen durch Vorprägen gebildeten Kragen (8) aufweist, mittels einer ringförmigen Verbindungsstelle (10) am Kragen (8) fest und gasdicht mit dem Innenkörper (1) verbunden ist und durch Nachprägen an der äußeren Oberfläche des Innenkörpers (1) entsprechend gewellt ist, und
- mit einer äußeren Druckkappe (11),
- die unter Zwischenlegen eines Dichtungsringes (13) gegen die Trennmembran (7) gepreßt ist,
**dadurch gekennzeichnet, daß**
- der strukturierte Bereich (3) des Innenkörpers (1) nach außen durch eine äußere wellenbergartige Erhebung (4') begrenzt ist und
- die Trennmembran (7) mit ihrem Kragen (8) außen an der äußeren wellenbergartigen Erhebung (4') anliegend mit dem Innenkörper (1) verbunden ist.

7. Anordnung nach Anspruch 6,
**dadurch gekennzeichnet, daß**
- die äußere Flanke (9) der äußeren wellenbergartigen (4') Erhebung bis unter das Niveau der wellentalartigen Vertiefungen (6) verlängert ist und
- die Verbindungsstelle (10) zwischen Trennmembran (7) und Innenkörper (1) im verlängerten Bereich der äußeren Flanke (9) liegt.

8. Anordnung nach Anspruch 6,
**dadurch gekennzeichnet, daß**
- die Trennmembran (30) an ihrem äußeren Rand einen sich an den Kragen (36) anschließenden ebenen Ringbereich (37) aufweist, und
- an ihrem ebenen Ringbereich (37) mit einem ebenen Rand (35) des Innenkörpers (32) verbunden ist.

9. Anordnung nach einem der Ansprüche 6 bis 8,
**dadurch gekennzeichnet, daß**
- der Dichtungsring (13) die Verbindungsstelle (10) überdekkend angeordnet ist.

## Claims

1. Method for producing a separating membrane system for a pressure transducer with
- an inner body (1) having a structured area (3) on its outer surface (2) with annular, wave-crest-shaped peaks (4, 4') and annular, wave-hollow-shaped troughs (6)
- with a separating membrane (7),
- which in the area of its outer circumference has a collar formed by pre-cutting, is connected to the inner body (1) firmly and gas-tightly by means of an annular joint (10) on the collar (8) and is undulated accordingly by post-cutting on the outer surface of the inner body (1), and
- with an outer pressure cap (11),
- which is pressed against the separating membrane (7) with the insertion of a sealing ring (13) in between,
**characterized in that**
- an inner body (1) is used, the structured area (3) of which is delimited outwards by an outer wave-crest-shaped peak (4'),
- the pre-cut separating membrane (7) is connected to the inner body (1) with its collar (8) resting outside on the outer wave-crest-shaped peak (4'),
- the membrane (7) is then post-cut and
- the pressure cap (11) with the sealing ring (13) is then fitted.

2. Method according to claim 1, **characterized in that**
- the collar (8) is connected to the inner body (1) at the outer flank of the outer wave-shaped peak (4').

3. Method according to claim 1, **characterized in that**
- the collar (8) is connected to the inner body (1) at an area of the extended flank of the outer wave-shaped peak (4') lying below the level of the wave-shaped troughs (6).

4. Method according to claim 1, **characterized in that**
- the separating membrane is pre-cut so that it has a level annular area connected to the collar at its outer edge, and
- the separating membrane is connected at its level annular area to a level edge of the inner body.

5. Method according to any of the preceding claims,
**characterized in that**
- the sealing ring is arranged covering the joint between the separating membrane and inner body.

6. Separating membrane system for a pressure transducer, with
- an inner body (1) having a structured area (3) on its outer surface (2) with annular, wave-crest-shaped peaks (4, 4') and annular, wave-hollow-shaped troughs (6),
- with a separating membrane (7),
- which in the area of its outer circumference has a collar (8) formed by pre-cutting, is connected to the inner body (1) firmly and gas-tightly by means of an annular joint (10) on the collar (8) and is undulated accordingly by post-cutting on the outer surface of the inner body (1), and
- with an outer pressure cap (11),
- which is pressed against the separating membrane (7) with the insertion of a sealing ring (13) in between,
**characterized in that**
- the structured area (3) of the inner body (1) is delimited outwards by an outer wave-crest-shaped peak (4') and
- the separating membrane (7) is connected to the inner body (1) with its collar (8) resting outside on the outer wave-crest-shaped peak (4').

7. System according to claim 6, **characterized in that**
- the outer flank (9) of the outer, wave-crest-shaped (4') peak is extended to below the level of the wave-hollow-shaped troughs (6) and
- the joint (10) between the separating membrane (7) and inner body (1) lies in the extended area of the outer flank (9).

8. System according to claim 6, **characterized in that**
- the separating membrane (30) has on its outer edge a level annular area (37) connected to the collar (36), and
- is connected at its level annular area (37) to a level edge (35) of the inner body (32).

9. System according to any of claims 6 to 8,
**characterized in that**
- the sealing ring (13)" is arranged to cover the joint (10).

## Revendications

1. Procédé de fabrication d'un système de membrane de séparation pour un transducteur de mesure de pression comprenant
- une pièce (1) intérieure comportant sur sa surface (2) extérieure une partie (3) structurée ayant des saillies (4, 4') annulaires de type en sommet d'ondulation et des cavités (6) annulaires de type en creux d'ondulation,
- une membrane (7) de séparation,
- qui comporte dans la partie de son pourtour extérieur un collet formé par prématriçage, qui est relié solidement et d'une manière étanche aux gaz à la pièce (1) intérieure au moyen d'un point (10) annulaire de liaison sur le collet (8) et qui est ondulé de manière correspondante par post-matriçage sur la surface extérieure de la pièce (1) intérieure, et
- un chapeau (11) extérieur résistant à la pression,
- qui est pressé avec interposition d'une bague (13) d'étanchéité sur la membrane (7) de séparation,
**caractérisé en ce que**
- il est utilisé une pièce (1) intérieure dont la partie (3) structurée est délimitée vers l'extérieur par une saillie (4') extérieure de type à sommet d'ondulation,
- la membrane (7) de séparation prématricée est reliée à la pièce (1) intérieure par son collet (8) s'appliquant à l'extérieur à la saillie (4') extérieure du type en sommet d'ondulation,
- ensuite le post-matriçage de la membrane (7) de séparation est effectué, et
- ensuite le chapeau (11) résistant à la pression est mis avec la bague (13) d'étanchéité.

2. Procédé suivant la revendication 1,
**caractérisé en ce que**
- le collet (8) est relié à la pièce (1) intérieure sur le flanc extérieur de la saillie (4') extérieure du type à ondulation.

3. Procédé suivant la revendication 1,
**caractérisé en ce que**
- le collet (8) est relié à la pièce (1) intérieure sur une partie du flanc prolongé de la saillie (4') extérieure du type à ondulation, qui est sous le niveau des cavités (6) du type à ondulation.

4. Procédé suivant la revendication 1,
**caractérisé en ce que**
- la membrane de séparation est prématricée de façon à comporter sur son bord extérieur une partie annulaire plane se raccordant au collet, et
- la membrane de séparation est reliée par sa partie annulaire plane à un bord plan de la pièce intérieure.

5. Procédé suivant l'une des revendications précédentes,
**caractérisé en ce que**
- la bague d'étanchéité est disposée à recouvrement du point de liaison entre la membrane de séparation et la pièce intérieure.

6. Système de membrane de séparation pour un transducteur de mesure de pression comprenant
- une pièce (1) intérieure comportant sur sa surface (2) extérieure une partie (3) structurée ayant des saillies (4, 4') annulaires de type en sommet d'ondulation et des cavités (6) annulaires de type en creux d'ondulation,
- une membrane (7) de séparation,
- qui comporte dans la partie de son pourtour extérieur un collet formé par prématriçage, qui est relié solidement et d'une manière étanche aux gaz à la pièce (1) intérieure au moyen d'un point (10) annulaire de liaison sur le collet (8) et qui est ondulé de manière correspondante par post-matriçage sur la surface extérieure de la pièce (1) intérieure, et
- un chapeau (11) extérieur résistant à la pression,
- qui est pressé avec interposition d'une bague (13) d'étanchéité sur la membrane (7) de séparation,
**caractérisé en ce que**
- la partie (3) structurée de la pièce (1) intérieure est délimitée vers l'extérieur par une saillie (4') extérieure du type en sommet d'ondulation, et
- la membrane (7) de séparation est reliée au corps (1) intérieur par son collet (8) s'appliquant à l'extérieur sur la saillie (4') extérieure du type en sommet d'ondulation.

7. Système suivant la revendication 6,
**caractérisé en ce que**
- le flanc (9) extérieur de la saillie (4') extérieure du type à sommet d'ondulation est prolongé jusqu'en-dessous du niveau des cavités (6) du type en creux d'ondulation, et
- le point (10) de liaison entre la membrane (7) de séparation et la pièce (1) intérieure se trouve dans la partie prolongée du flanc (9) extérieur.

8. Système suivant la revendication 6,
**caractérisé en ce que**
- la membrane (30) de séparation comporte sur son bord extérieur une partie (37) annulaire plane se raccordant au collet (36), et
- elle est reliée par sa partie (37) annulaire plane à un bord (35) plan de la pièce (32) intérieure.

9. Système suivant l'une des revendications 6 à 8,
**caractérisé en ce que**
- la bague (13) d'étanchéité est disposée à recouvrement du point (10) de liaison.
